# EUROPEAN PATENT SPECIFICATION

(11) **EP 4 600 850 B1**
(45) Date of publication and mention of the grant of the patent: **07.10.2026**
(21) Application number: 23912564.4
(22) Date of filing: 13.11.2023
(51) Int. Cl.: G06F 21/31, G06F 3/14, G06F 21/46, H04W 4/80, H04L 9/40, H04N 21/436, H04N 21/41, G06F 21/35, H04N 21/431, H04N 21/441, H04N 21/442, H04N 21/45, H04N 21/475

(54) **DISPLAY APPARATUS AND CONTROL METHOD THEREOF**
ANZEIGEVORRICHTUNG UND STEUERUNGSVERFAHREN DAFÜR
APPAREIL D'AFFICHAGE ET PROCÉDÉ DE COMMANDE ASSOCIÉ

(30) Priority: 30.12.2022 KR 20220190638
(43) Date of publication of application: 13.08.2025
(73) Proprietor: Samsung Electronics Co., Ltd., Suwon-si, Gyeonggi-do 16677 (KR)
(72) Inventor: LEE, Hyejin, Suwon-si, Gyeonggi-do 16677 (KR); KIM, Jongho, Suwon-si, Gyeonggi-do 16677 (KR); MIN, Jiyoon, Suwon-si, Gyeonggi-do 16677 (KR); WON, Seolhye, Suwon-si, Gyeonggi-do 16677 (KR)
(74) Representative: Gulde & Partner
(86) International application number: PCT/KR2023/018166
(87) International publication number: WO 2024/143887

(56) References cited:
- EP-A1- 3 823 240
- JP-A- 2021 096 883
- JP-A- 2021 096 883
- KR-A- 20120 053 169
- KR-A- 20180 111 974
- KR-B1- 102 336 416
- US-A1- 2014 075 385
- US-A1- 2021 173 955
- US-A1- 2022 343 009

## Description

### [Technical Field]

The disclosure relates to a display apparatus and a method for controlling the same, and more particularly, to a display apparatus that may log in to an application and a method for controlling the same.

### [Background Art]

In general, a display apparatus is an output apparatus for visually displaying image information received from the outside or stored therein for a user. The display apparatus is widely used in various fields, such as home or places of business.

Examples of display apparatuses are a monitor connected with a personal computer (PC), a server computer, or the like, a portable computer, a navigation terminal, a television, an Internet protocol television (IPTV), a portable terminal (for example, a smartphone, a tablet PC, Personal Digital Assistant (PDA), or a cellular phone), various kinds of displays used to reproduce images of advertisements or movies in industrial fields, and various kinds of audio/video systems.

When trying to execute personalized content, such as an application, on a shared device such as a TV that may run an application that supports login for a plurality of accounts, a user must always log in directly with a user account that the user desires to log in to.

In addition, even on a shared device used by a family, in a case where a family member desires to log in for content, each member must log in separately.

US 2014/075385 A1 discloses a data processing system including components for providing a pleasant user experience. Those components may include a family interaction engine that provides a family channel. The family interaction engine may provide for creation of a user group. The family channel may present content of interest to multiple users in the user group. When a user is detected near the data processing system, the family interaction engine may automatically present content of interest to that user. When used for presenting media content, the data processing system may also cause supplemental data to automatically be presented, wherein the supplemental data is relevant to the media content and to a predetermined interest of the user. The data processing system may also provide a ranked list of applications for potential activation by the user. The applications may be ordered based on the current context.

US 2022/343009 A1 discloses a method for enabling a user to access a blocked media asset. The method allows a user to request that a parent, or another user, who can approve access to the blocked media asset approve access to the blocked media asset for viewing. The request may be transmitted as a notification to a mobile phone or another suitable device, such that the parent the other user can approve the request, even though they may be remote from the requesting user. Both the requesting user and the user whose approval is required to unblock the media asset (i.e., the approver), are identified by the system based on an identifier associated with each user. This informs the approver which user submitted the request. Additionally, this also adds a layer of security, since the approver must enter an identifier to authenticate their identity to the system before being able to unblock the program for the requesting user.

EP 3823240 A1 disclose a set top box and a mobile terminal accessing a same wireless network. The set top box obtains a terminal identifier of the mobile terminal by using the wireless network; the set top box searches a relationship table for a service account and a password that are corresponding to the terminal identifier; and if the set top box finds the service account and the password that are corresponding to the terminal identifier, the set top box logs in to a server by using the service account and the password that are corresponding to the terminal identifier. The terminal identifier may be an application account that is associated with the service account and used in an application on the mobile terminal. The service account of two users are logged in to the set-top box and content that interests both users is received from the content provider.

JP 2021096883 A discloses a management system including identification information that identifies an operator, detection means that detects that the identification information is within a reading range in a non-contact manner, and manually or the operator that involves the operation of the operator. The login means that automatically performs the login process of the operator based on the identification information and the logout process of the operator when the identification information of the logged-in operator is no longer detected automatically without the operation of The first logout means to be performed, the second logout means for manually performing the logout process of the operator while the identification information of the logged-in operator is detected, and the logout process by the second logout means. After that, a prohibition means for prohibiting the automatic login process by the login means of the operator who performed the logout process is provided.

### [Disclosure]

### [Technical Problem]

The disclosure provides a display apparatus that, when logged in to an application that supports login for a plurality of accounts, may determine the most likely user account to log in and perform the login, and a method for controlling the same.

In addition, the disclosure provides a display apparatus that, in a case where a person's account is registered with the accounts of others, such as family members, may register the accounts of others (family members) in a login history by the login of one family member, and a method for controlling the same.

### [Technical Solution]

The present invention is defined by the appended set of claims. Preferred embodiments are defined by the dependent claims. According to an aspect of the disclosure, a display apparatus may include: communication circuitry configured to communicate with an external device; a display configured to display at least one application; an input portion configured to receive an execution command for the at least one application from a user; and a controller configured to control the display to display a plurality of user accounts that were previously logged in in response to receiving the execution command, wherein the controller may be configured to control the display to display at least one of the plurality of user accounts differently from remaining user accounts based on communication information with the external device.

The controller may be configured to control the display to display at least one user account differently from the remaining user accounts, the at least one user account being registered on at least one external device that performs short-range communication with the communication circuitry.

The controller may be configured to control the display to display at least one user account differently from the remaining user accounts, the at least one user account being registered on at least one external device connected to the same network as the communication circuitry.

Based on the plurality of user accounts being horizontally arranged and displayed, the controller may be configured to control the display to allow at least one of the plurality of user accounts to be positioned to a left or right side of the remaining user accounts.

Based on the plurality of user accounts being vertically arranged and displayed, the controller may be configured to control the display to allow at least one of the plurality of user accounts to be positioned above the remaining user accounts.

The controller may be configured to control the display to display at least one of the plurality of user accounts in a highlighted or selectable state relative to the remaining user accounts.

Based on a plurality of external devices performing short-range communication with the communication circuitry, the controller may be configured to control the display to display a plurality of user accounts registered on the external devices differently from the remaining user accounts, based on at least one of a strength of a signal received from each of the plurality of external devices through the communication circuitry, a number of logins of user accounts registered on the plurality of external devices, or a login order of the user accounts registered on the plurality of external devices.

Based on a single external device performing short-range communication with the communication circuitry, the controller may be configured to perform a login with the user account registered on the external device.

The controller may be configured to: receive information of a plurality of external devices, in which the plurality of user accounts that were previously logged in are registered, from a server through long-range communication of the communication circuitry, and control the display to display at least one user account differently from the remaining user accounts, the at least one user account being registered on at least one external device that performs short-range communication with the communication circuitry from among the plurality of external devices in which the plurality of user accounts that were previously logged in are registered.

The controller may be configured to register information about a newly logged-in user account in a login history, based on absence of a previously logged-in user account.

Based on another user's preset account being registered together with the newly logged-in user account, the controller may be configured to register information about the other user's account in the login history.

The controller may be configured to transmit a signal about whether to allow login to the external device, based on receiving a user input for selecting the differently displayed user account, and perform a login to the selected user account, based on receiving a signal that allows login from the external device.

Based on the newly logged-in user account being an account of a child, the controller may be configured to perform a login to the child account in response to a determination that the login is attempted by an external device to which an account of a guardian of the child is registered.

Based on a preset setting value being included in the child's account, the controller may be configured to control the preset setting value to be applied to the logged-in display apparatus.

According to an aspect of the disclosure, in a method for controlling a display apparatus, the method may include: receiving an execution command for at least one application from a user; displaying a plurality of user accounts that were previously logged in in response to receiving the execution command; and controlling at least one of the plurality of user accounts to be displayed differently from remaining user accounts based on communication information with an external device.

The controlling at least one of the plurality of user accounts to be displayed differently may include controlling at least one user account, registered on at least one external device that performs short-range communication with communication circuitry configured to communicate with an external device, to be displayed differently from the remaining user accounts.

The controlling at least one of the plurality of user accounts to be displayed differently may include controlling at least one user account, registered on at least one external device connected to the same network as the communication circuitry configured to communicate with the external device, to be displayed differently from the remaining user accounts.

The controlling at least one of the plurality of user accounts to be displayed differently may include controlling at least one of the plurality of user accounts to be positioned to a left or right side of the remaining user accounts, based on the plurality of user accounts being horizontally arranged and displayed.

The controlling at least one of the plurality of user accounts to be displayed differently may include controlling at least one of the plurality of user accounts to be positioned above the remaining user accounts, based on the plurality of user accounts being vertically arranged and displayed.

The controlling at least one of the plurality of user accounts to be displayed differently may include controlling at least one of the plurality of user accounts to be displayed in a highlighted or selectable state relative to the remaining user accounts.

The controlling at least one of the plurality of user accounts to be displayed differently may include, in response to a plurality of external devices performing short-range communication with the communication circuitry, controlling a plurality of user accounts registered on the external devices to be displayed differently from the remaining user accounts, based on at least one of a strength of a signal received from each of the plurality of external devices through the communication circuitry, a number of logins of user accounts registered on the plurality of external devices, or a login order of the user accounts registered on the plurality of external devices.

The method may further include performing a login with the user account registered on the external device, based on a single external device performing short-range communication with the communication circuitry.

The controlling at least one of the plurality of user accounts to be displayed differently may include: receiving information of a plurality of external devices, in which the plurality of user accounts that were previously logged in are registered, from a server through long-range communication of the communication circuitry, and controlling at least one user account to be displayed differently from the remaining user accounts, the at least one user account being registered on at least one external device that performs short-range communication with the communication circuitry from among the plurality of external devices in which the plurality of user accounts that were previously logged in are registered.

The method may further include registering information about a newly logged-in user account in a login history, based on absence of a previously logged-in user account.

The method may further include registering information about another user's preset account in the login history, based on the other user's account being registered together with the newly logged-in user account.

The method may further include, based on receiving a user input for selecting the differently displayed user account, transmitting a signal about whether to allow login to the external device, and based on receiving a signal that allows login from the external device, performing a login to the selected user account.

The method may further include, based on the newly logged-in user account being an account of a child, performing a login to the child account in response to a determination that the login is attempted by an external device to which an account of a guardian of the child is registered.

The method may further include, based on a preset setting value being included in the child's account, controlling the preset setting value to be applied to the logged-in display apparatus.

### [Advantageous Effects]

According to an aspect of the disclosure, when logged in to an application that supports login for a plurality of accounts, the most likely user account to log in may be determined to perform the login, thereby enabling easy login to a shared device and enhancing a personalized application experience on the shared device.

In addition, in a case where a person's account is registered with the accounts of others, such as family members, the accounts of others (family members) may be registered in a login history by the login of one family member, thereby enabling easy login for the others (family members).

### [Description of Drawings]

FIG. 1 is a control block diagram of a display apparatus according to an embodiment.
FIG. 2 is a diagram illustrating executable applications displayed on a display apparatus according to an embodiment.
FIG. 3 is a diagram illustrating executable applications displayed on a display apparatus according to an embodiment.
FIG. 4 is a diagram illustrating a login screen displayed on a display apparatus according to an embodiment.
FIG. 5 is a flowchart illustrating operations for displaying a user account differently from other accounts according to an embodiment.
FIG. 6 is a diagram illustrating an external device performing short-range communication with a display apparatus according to an embodiment.
FIG. 7 is a diagram illustrating a router, a display apparatus, and an external device each communicating with each other according to an embodiment.
FIG. 8 is a diagram illustrating various examples of user accounts displayed on a display apparatus according to an embodiment.
FIG. 9 illustrates displaying a user account according to an external device performing short-range communication with communication circuitry according to an embodiment.
FIG. 10 is a diagram illustrating a plurality of external devices performing short-range communication with a display apparatus according to an embodiment.
FIG. 11 is a flowchart illustrating an operation performed in a case where a single external device performs short-range communication with communication circuitry according to an embodiment.
FIG. 12 is a control block diagram of a display apparatus according to an embodiment.
FIG. 13 is a flowchart illustrating a method for controlling a display apparatus in a case where no login history exists according to an embodiment.
FIG. 14 is a diagram illustrating that other person's user accounts are registered together with one user account.
FIG. 15 is a flowchart illustrating a process for performing a login based on a selection of a displayed user account according to an embodiment.
FIG. 16 is a flowchart illustrating operations performed when logging in with a child account according to an embodiment.
FIG. 17 is a flowchart illustrating operations performed when logging in with a child account according to an embodiment.

### [Modes of the Invention]

Various embodiments and the terms used therein are not intended to limit the technology disclosed herein to specific forms, and the disclosure should be understood to include various modifications, equivalents, and/or alternatives to the corresponding embodiments within the scope defined by the appended set of claims.

In addition, like reference numerals refer to like elements throughout the specification.

In addition, the terms used herein is for the purpose of describing particular embodiments only and is not intended to limit the disclosure. A singular form of a noun corresponding to an item may include one or more of the items unless clearly indicated otherwise in a related context. It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

In addition, it is to be understood that when a certain component is referred to as being "connected to," or "coupled with," another component, it means that the component may be connected to or coupled with the other component directly or indirectly via a third component.

In addition, although the terms "first", "second", etc. may be used to describe various components, the terms do not limit the corresponding components, but are used only for the purpose of distinguishing one component from another. As used herein, the term "and/or" includes any and all combinations of one or more of the associated listed items.

Hereinafter, an operating principle and embodiments of the disclosure will now be described with reference to accompanying drawings.

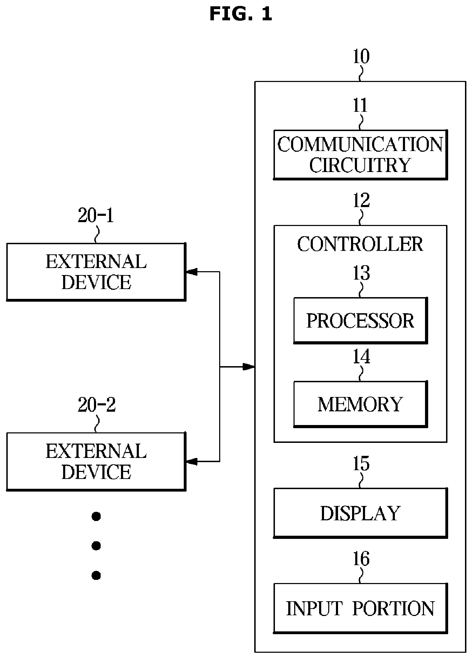

FIG. 1 is a control block diagram of a display apparatus according to an embodiment.

The display apparatus 10 includes communication circuitry 11, a display 15, an input portion 16, and a controller 12. The controller 12 may include at least one processor 13 and memory 14.

The display apparatus 10 refers to a device that may display, and examples thereof include a television, and various home appliances and devices equipped with the display 15.

The communication circuitry 11 may perform communication with an external device 20.

Here, the external device 20 may include all kinds of handheld-based wireless communication devices, such as personal communication system (PCS), global system for mobile communications (GSM), personal digital cellular (PDC), personal handyphone system (PHS), personal digital assistant (PDA), international mobile telecommunication(IMT)-2000, code division multiple access (CDMA)-2000, W-code division multiple access (W-CDMA), wireless broadband internet (WiBro) terminals, smartphones, etc., and wearable devices such as watches, rings, bracelets, anklets, necklaces, glasses, contact lenses, or head-mounted devices (HMDs).

In the disclosure, for convenience of description, the case where the external device 20 is a smartphone is described as an example.

The communication circuitry 11 may perform communication not only with the external device 20 but also with a server 30.

To this end, the communication circuitry 11 may further include a short-range communication module (not shown) that communicates with the external device 20 and a long-range communication module (not shown) that communicates with the server 30.

The display 15 may display at least one application.

The display 15 may be implemented as any device for displaying to a user, and may be used to display all functions of the display apparatus 10 described below.

The input portion 16 may receive an execution command for at least one application from a user.

The input portion 16 may be provided in the display apparatus 10 to allow the user to directly input to the display apparatus 10, or may receive a user input from an external device such as a remote control. However, the above-described input portion 16 is only an example, and may be provided in various forms for receiving a user input.

The controller 12 may include the memory 14 that stores a control program and control data for controlling the communication circuitry 11, the input portion 16, and the display 15, and at least one processor 13 that generates a control signal according to the control program and control data stored in the memory 14. The memory 14 and the processor 13 may be provided integrally or separately.

The memory 14 may store account information of a logged-in user, and may store a program and data for controlling the communication circuitry 11, the input portion 16, and the display 15.

The memory 14 may include a volatile memory such as a static random access memory (S-RAM) and a dynamic random access memory (DRAM) for temporarily storing data. In addition, the memory 14 may include non-volatile memory such as read only memory (ROM), erasable programmable read only memory (EPROM), and electrically erasable programmable read only memory (EEPROM) for long-term data storage.

The processor 13 may include various logic circuits and operation circuits, and may process data according to a program provided from the memory 14 and generate a control signal according to the processing result.

The controller 12 may control the display 15 to display a plurality of logged-in user accounts in response to receiving an execution command. In addition, the controller 12 may control the display 15 to display at least one of the plurality of user accounts differently from the remaining user accounts based on communication information with the external device 20.

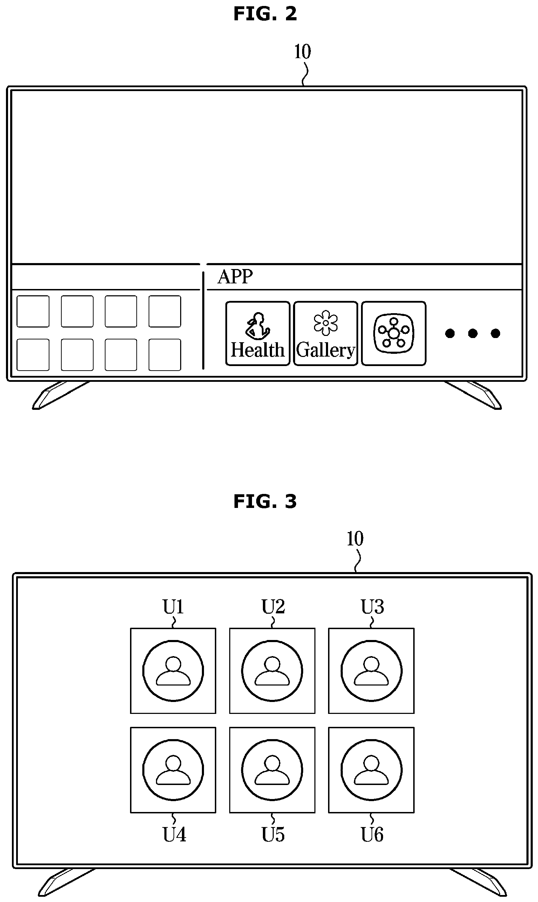

FIG. 2 is a diagram illustrating executable applications displayed on a display apparatus according to an embodiment. FIG. 3 is a diagram illustrating a login screen displayed on a display apparatus according to an embodiment.

The display apparatus 10 may display at least one application, i.e., the display apparatus 10 may display an executed application itself, as well as display an icon of an application for executing the application, etc.

Referring to FIG. 2, it may be seen that an icon of at least one executable application is displayed on the display apparatus 10.

Various applications may be executed through the display apparatus 10, such as a health application related to the user's health, a gallery application for viewing saved photos, and an application for connecting with other devices to perform various controls.

Because such applications often display different information for each user, a separate login is required for each user.

Accordingly, upon execution of the application, a separate screen for login with a user account may be displayed.

Referring to FIG. 3, a screen where a plurality of user accounts for login to an application are displayed is shown. The user accounts may be displayed in the form of icons.

The user accounts displayed upon execution of the application may be a user account that already has a login history to the application.

The user may log in to the user account by selecting one of the displayed user accounts.

In a case where the process of finding and selecting a user account for login is repeated each time the application is executed, it may be cumbersome and reduce user convenience in using the application.

Accordingly, a method for selecting a likely account to log in to the application and facilitating the login is described below.

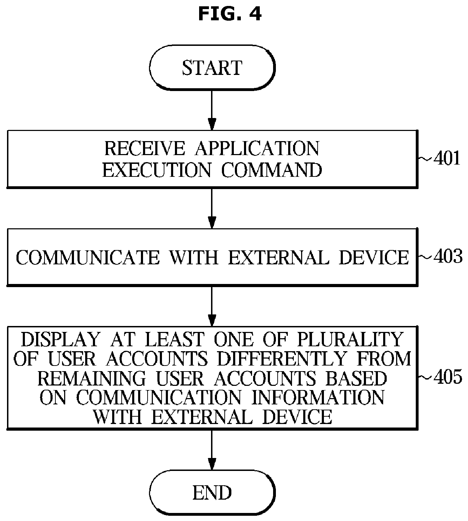

FIG. 4 is a flowchart illustrating a method for controlling a display apparatus according to an embodiment.

Based on receiving an execution command for at least one application from a user (401), the communication circuitry 11 may perform communication with the external device 20 (403).

The communication between the communication circuitry 11 and the external device 20 may already be performed even before a user executes an application.

The controller 12 may control to allow a plurality of user accounts that were previously logged in to be displayed in response to receiving the execution command.

The controller 12 may control to allow at least one of the plurality of user accounts to be displayed differently from the remaining user accounts based on the communication information with the external device 20 (405).

Hereinafter, displaying at least one of the plurality of user accounts differently from the remaining user accounts is described in detail.

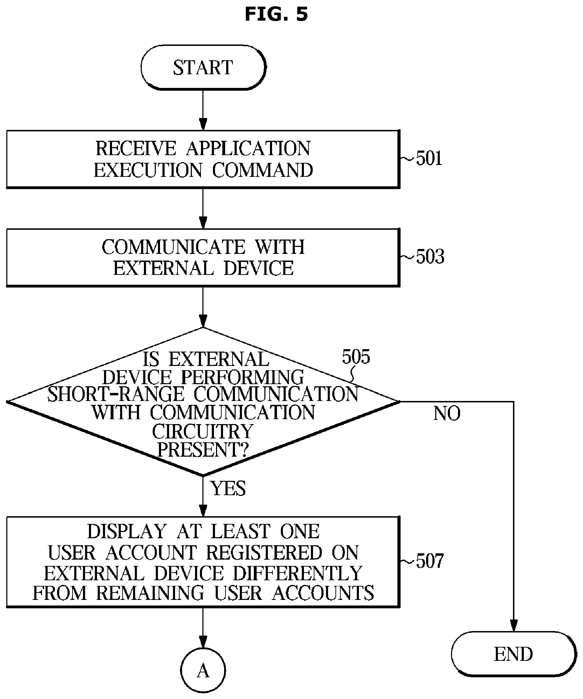

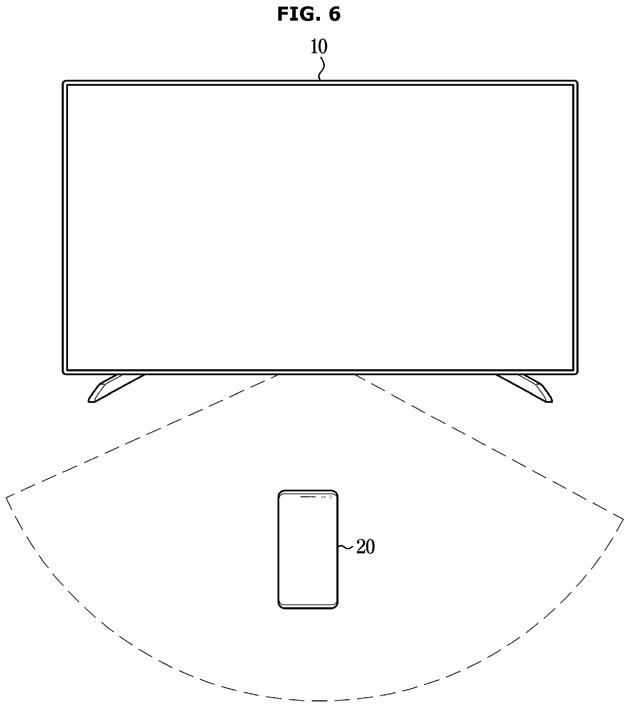

FIG. 5 is a flowchart illustrating operations for displaying a user account differently from other accounts according to an embodiment. FIG. 6 is a diagram illustrating the external device 20 performing short-range communication with a display apparatus according to an embodiment.

Based on receiving an execution command for at least one application from a user (501), the communication circuitry 11 may perform communication with the external device 20 (503).

The communication between the communication circuitry 11 and the external device 20 may already be performed even before a user executes the application.

The controller 12 may determine whether at least one external device 20 performing short-range communication with the communication circuitry 11 is present.

Here, the short-range communication method may be one of Bluetooth, Bluetooth low energy, infrared data association (IrDA), Zigbee, Wi-Fi, Wi-Fi direct, Ultra Wideband (UWB), or near field communication (NFC).

That is, in a case where the external device 20 exists around the display apparatus 10 as shown in FIG. 6, short-range communication may be performed between the display apparatus 10 and the external device 20 through a short-range communication module (not shown) of the communication circuitry 11 of the display apparatus 10.

Although a case where a single external device 20 exists around the display apparatus 10 and performs short-range communication is illustrated in FIG. 6, the number of external devices 20 that may perform short-range communication with the display apparatus 10 is not limited.

In a case where at least one external device 20 performing short-range communication with the communication circuitry 11 is present (Yes in operation 505), the controller 12 may control the display 15 to display at least one user account, registered on the at least one external device 20 performing short-range communication with the communication circuitry 11, differently from the remaining user accounts (507).

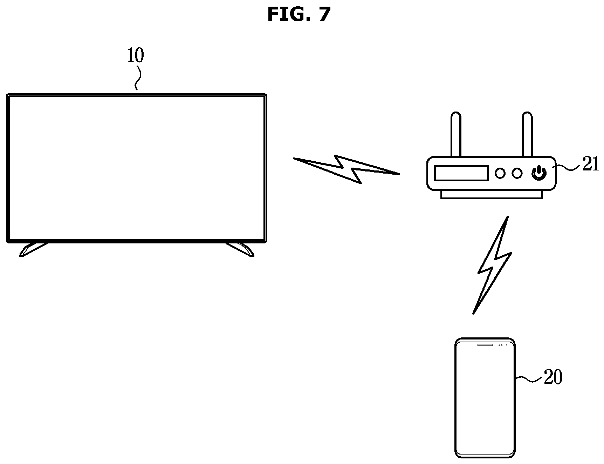

FIG. 7 is a diagram illustrating a router, a display apparatus, and an external device each communicating with each other according to an embodiment.

In FIG. 6, the external device 20 that performs direct short-range communication with the display apparatus 10 was described.

Differently from the above, as shown in FIG. 7, the external device 20 connected to the same network as the display apparatus 10 may be recognized.

The controller 12 may control the display 15 to display at least one user account, registered on at least one external device 20 connected to the same network as the communication circuitry 11, differently from the remaining user accounts.

That is, in a case where the communication circuitry 11 of the display apparatus 10 communicates with the router 21 and is connected to a network such as Wi-Fi, and the external device 20 also communicates with the same router 21 and is connected to the same network such as Wi-Fi as the display apparatus 10, the controller 12 may control the display 15 to display at least one user account, registered on at least one external device 20 connected to the same network as the communication circuitry 11, differently from the remaining user accounts.

The communication circuitry 11 may receive information about the external device 20 connected to the same network from the router 21, and thus may identify the at least one external device 20 connected to the same network as the communication circuitry 11.

In this instance, the router 21 may be included in the external device 20 described above. That is, display of a user account may be controlled based on communication information between the display apparatus 10 and the router 21 which is the external device 20.

Hereinafter, described is a method for displaying at least one user account, registered on at least one external device 20 that performs short-range communication with the communication circuitry 11 or is connected to the same network as the communication circuitry 11, differently from the remaining user accounts.

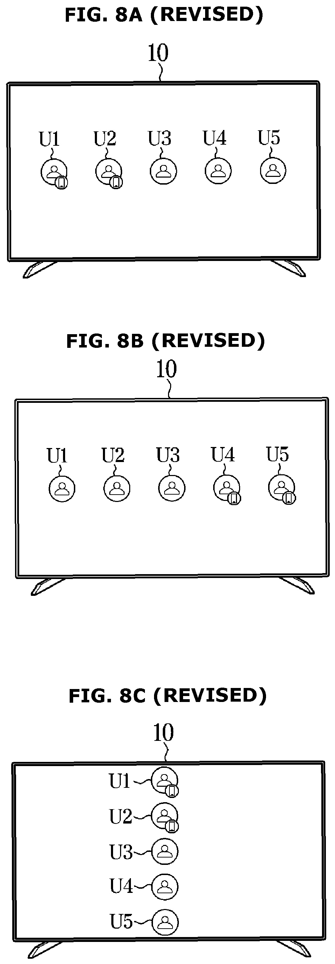

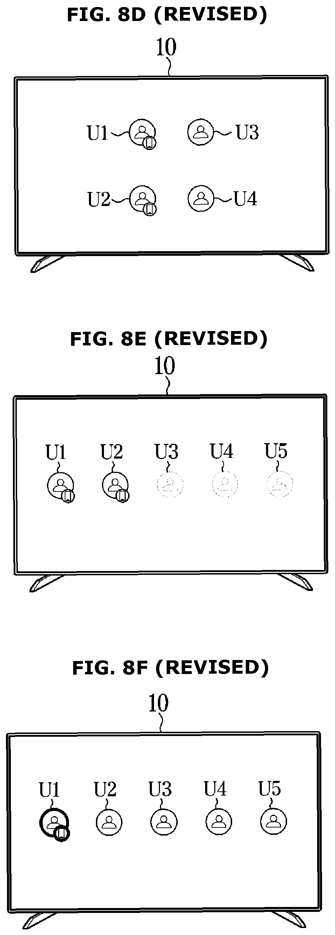

FIG. 8 is a diagram illustrating various examples of user accounts displayed on a display apparatus according to an embodiment.

As described above, the controller 12 may control the display 15 to display a plurality of user accounts U1, U2, U3, U4, and U5 that were previously logged in.

As shown in FIG. 8, at least one user account registered on at least one external device 20 that performs short-range communication with the communication circuitry 11 or is connected to the same network as the communication circuitry 11 may be displayed by including a separate smartphone-shaped icon, allowing a user to easily identify the user account. However, the smartphone-shaped icon is only an example and may be expressed in various forms.

In a case where a plurality of user accounts are horizontally arranged and displayed, the controller 12 may control the display 15 to allow at least one of the plurality of user accounts to be positioned to the left or right of the remaining user accounts.

In addition, in a case where a plurality of user accounts are vertically arranged and displayed, the controller 12 may control the display 15 to allow at least one of the plurality of user accounts to be positioned above the remaining user accounts.

In addition, the controller 12 may control the display 15 to display at least one of the plurality of user accounts in a highlighted or selectable state relative to the remaining user accounts.

The above-described embodiment is described in detail below with reference to FIG. 8.

FIG. 8(a) and 8(b) are drawings illustrating that a plurality of user accounts U1, U2, U3, U4, and U5, that were previously logged in, are horizontally arranged and displayed.

In FIG. 8(a), the controller 12 may control the display 15 to allow at least one user account U1 and U2, registered on at least one external device 20 that performs short-range communication with the communication circuitry 11 or is connected to the same network as the communication circuitry 11, to be positioned to the left of the remaining user accounts U3, U4, and U5.

In FIG. 8(b), the controller 12 may control the display 15 to allow at least one user account U4 and U5, registered on at least one external device 20 that performs short-range communication with the communication circuitry 11 or is connected to the same network as the communication circuitry 11, to be positioned to the right of the remaining user accounts U1, U2, and U3.

By positioning a user account that is likely to log in to the left or right of the remaining accounts and displaying the user account differently as described above, the user may easily identify the account to log in to.

FIG. 8(c) is a drawing illustrating that a plurality of user accounts U1, U2, U3, U4, and U5 that were previously logged in are vertically arranged and displayed.

The controller 12 may control the display 15 to allow at least one user account U1 and U2, registered on at least one external device 20 that performs short-range communication with the communication circuitry 11 or is connected to the same network as the communication circuitry 11, to be positioned above the remaining user accounts U3, U4, and U5.

By positioning a user account that is likely to log in above the remaining accounts and displaying the user account differently, the user may easily identify the account to log in to.

In addition, depending on circumstances, the controller 12 may control the display 15 to allow at least one user account U1 and U2, registered on at least one external device 20 that performs short-range communication with the communication circuitry 11 or is connected to the same network as the communication circuitry 11, to be positioned below the remaining user accounts U3, U4, and U5.

FIG. 8(d) is a drawing illustrating that a plurality of user accounts U1, U2, U3, U4, and U5 that were previously logged in are arranged and displayed in a matrix form of two rows and two columns.

In this instance, the controller 12 may control the display 15 to allow at least one user account U1 and U2, registered on at least one external device 20 that performs short-range communication with the communication circuitry 11 or is connected to the same network as the communication circuitry 11, to be arranged in the first column.

In addition, the controller 12 may control the display 15 to allow at least one user account U1 and U2, registered on at least one external device 20 that performs short-range communication with the communication circuitry 11 or is connected to the same network as the communication circuitry 11, to be arranged in the first row.

FIG. 8(e) is a drawing illustrating that at least one user account U1 and U2, registered on at least one external device 20 that performs short-range communication with the communication circuitry 11 or is connected to the same network as the communication circuitry 11, is highlighted.

That is, by blurring the remaining user accounts U3, U4, and U5 except for at least one user account U1 and U2 registered on at least one external device 20 that performs short-range communication with the communication circuitry 11 or is connected to the same network as the communication circuitry 11, the at least one user account U1 and U2 registered on the at least one external device 20 that performs short-range communication with the communication circuitry 11 or is connected to the same network as the communication circuitry 11 may be highlighted.

The above examples are merely an example of highlighting, and may be implemented in various forms, such as adding a separate mark to highlight the at least one user account U1 and U2 registered on at least one external device 20 that performs short-range communication with the communication circuitry 11 or is connected to the same network as the communication circuitry 11.

FIG. 8(f) is a drawing illustrating that at least one user account U1, registered on at least one external device 20 that performs short-range communication with the communication circuitry 11 or is connected to the same network as the communication circuitry 11, is displayed in a selectable state.

That is, when a screen for login is displayed, at least one user account U1, registered on at least one external device 20 that performs short-range communication with the communication circuitry 11 or is connected to the same network as the communication circuitry 11, may be displayed to be selectable immediately.

In this instance, the user may immediately select an account to log in to by simply operating an input button or the like.

As described above, at least one user account registered on at least one external device 20 that performs short-range communication with the communication circuitry 11 or is connected to the same network as the communication circuitry 11 may be displayed in various ways to be different from the remaining user accounts.

The examples shown in FIG. 8 are merely an example, and various embodiments for different display may be further included.

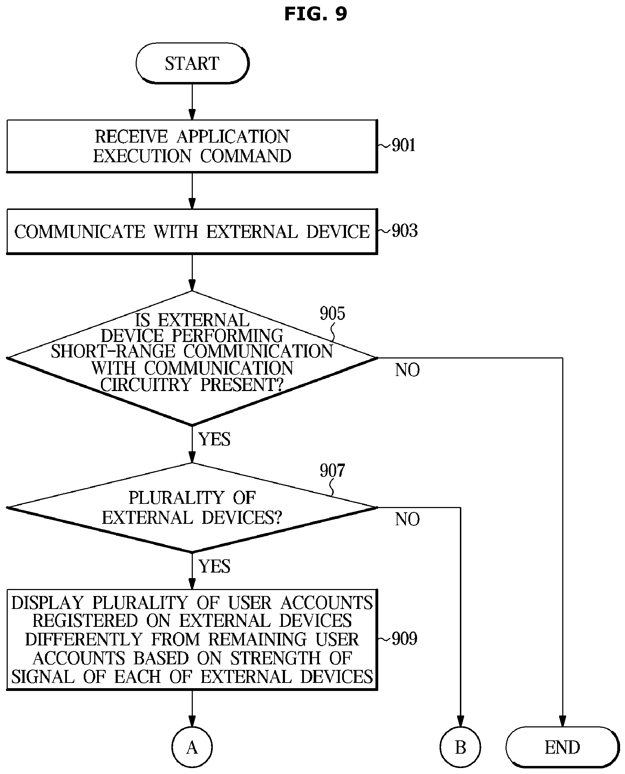

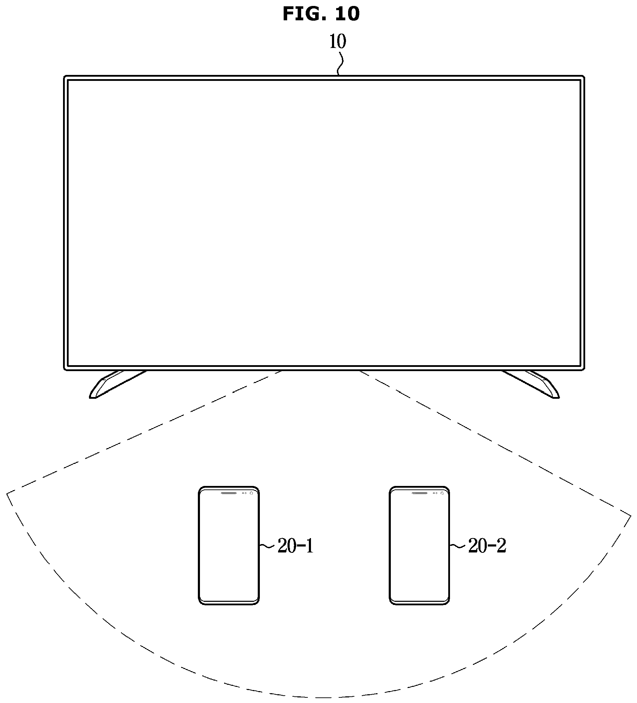

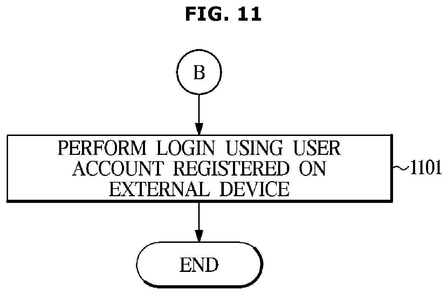

FIG. 9 illustrates displaying a user account according to an external device performing short-range communication with the communication circuitry according to an embodiment. FIG. 10 is a diagram illustrating a plurality of external devices performing short-range communication with a display apparatus according to an embodiment. FIG. 11 is a flowchart illustrating an operation performed in a case where a single external device performs short-range communication with the communication circuitry according to an embodiment.

Based on receiving an execution command for at least one application from a user (901), the communication circuitry 11 may perform communication with the external device 20 (903).

The communication between the communication circuitry 11 and the external device 20 may already be performed even before the user executes the application.

The controller 12 may determine whether an external device 20 performing short-range communication with the communication circuitry 11 is present.

In a case where the external device 20 performing short-range communication with the communication circuitry 11 is present (Yes in operation 905), it may be determined whether a plurality of external devices 20 are present.

As shown in FIG. 9, in a case where the plurality of external devices 20 performing short-range communication with the communication circuitry 11 are present (Yes in operation 907), the controller 12 may control the display 15 to display a plurality of user accounts registered on the external devices 20 differently from the remaining user accounts based on a strength of a signal received from each of the external devices 20 through the communication circuitry 11 (as shown in operation 909).

That is, in FIG. 10, in a case where a signal strength of a specific external device 20 (20-1) received through the communication circuitry 11 is stronger than a signal strength of another external device 20 (20-2), a user account registered on the external device 20 (20-1) may be determined as the most likely account to log in and displayed differently.

Referring to FIG. 8, the user account registered on the specific external device 20 (20-1) may be displayed by positioning the user account on the far left, far right, or above, or in a highlighted or selectable state.

The controller 12 may consider other conditions to determine a user account likely to log in, in a case where a plurality of external devices 20 performing short-range communication with the communication circuitry 11 are present.

For example, the number of logins of user accounts registered on each of the plurality of external devices 20 performing short-range communication with the communication circuitry 11 may be considered.

In a case where a particular user account has a large number of logins, the user account is highly likely to be logged in, and thus the most likely user account may be determined by considering the number of logins.

In addition, a login order of user accounts registered on each of the plurality of external devices 20 performing short-range communication with the communication circuitry 11 may be considered.

The user account that has a recent login history is highly likely to be logged in, and thus the most likely user account may be determined by considering the login order.

However, determining the most likely user account based on the above-described signal strength, number of logins, or login order is merely an example, and the most likely user account may be determined by various methods.

As shown in FIG. 6, in a case where a single external device 20 performing short-range communication with the communication circuitry 11 is present, the controller 12 may perform a login using a user account registered on the external device 20 (1101).

That is, in a case where the most likely user account is a single user account, a login to the user account may be performed.

The above description has been made with respect to the external device 20 performing short-range communication with the communication circuitry 11. However, as described above, the same may be applied to the external device 20 connected to the same network as the communication circuitry 11.

That is, the controller 12 may determine whether the external device 20 connected to the same network as the communication circuitry 11 is present, and in a case where the external device 20 connected to the same network as the communication circuitry 11 is present, it may be determined whether a plurality of external devices 20 are present.

In a case where the plurality of external devices 20 connected to the same network as the communication circuitry 11 are present, the controller 12 may control the display 15 to display the plurality of user accounts registered on the external devices 20 differently from the remaining user accounts based on a strength of a signal received from each of the external devices 20 through the communication circuitry 11.

In addition, one of the plurality of external devices 20 may perform short-range communication with the communication circuitry 11, and another of the plurality of external devices 20 may be connected to the same network as the communication circuitry 11.

In this case, at least one user account registered on the external device 20 performing short-range communication with the communication circuitry 11 may be displayed differently from the remaining user accounts.

In addition, depending on the type of short-range communication, at least one user account registered on the external device 20 connected to the same network as the communication circuitry 11 may be displayed differently from the remaining user accounts. Various criteria may be established depending on the degree of likelihood of login.

Hereinafter, a process for linking between a user account and the external device 20 performing short-range communication with the communication circuitry 11 is described.

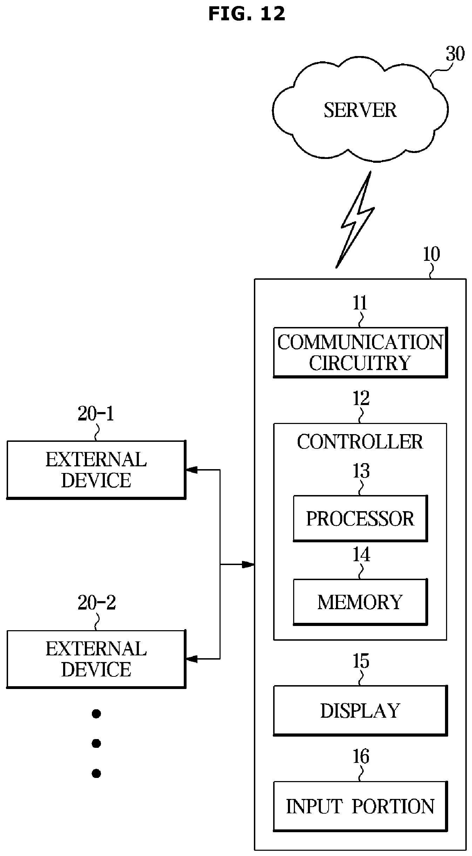

FIG. 12 is a control block diagram of a display apparatus according to an embodiment.

The communication circuitry 11 of the display apparatus 10 may perform communication with the server 30.

To this end, the communication circuitry 11 may include a long-range communication module (not shown) for long-range communication.

The communication circuitry 11 may receive information about a plurality of external devices 20, in which a plurality of user accounts that were previously logged in are registered, from the server 30 through long-range communication.

That is, information about the external device 20, such as a smartphone in which a user account having a login history to an application is registered, may be received.

Thereafter, the controller 12 may search for an external device 20 that matches the information about the external device 20 received from the server 30 among the external devices 20 performing short-range communication with the communication circuitry 11 through short-range communication.

In a case where the external device 20 that matches the information about the external device 20 received from the server 30 is present among the external devices 20 performing short-range communication with the communication circuitry 11, the display 15 may be controlled to display the user account registered on the external device 20 differently from the remaining user accounts.

That is, among the plurality of external devices 20 in which a plurality of user accounts that were previously logged in are registered, the display 15 may be controlled to display at least one user account registered on at least one external device 20 performing short-range communication with the communication circuitry 11 differently from the remaining user accounts.

In addition, information about the external device 20 in which a logged-in user account is registered may be stored in the display apparatus 10.

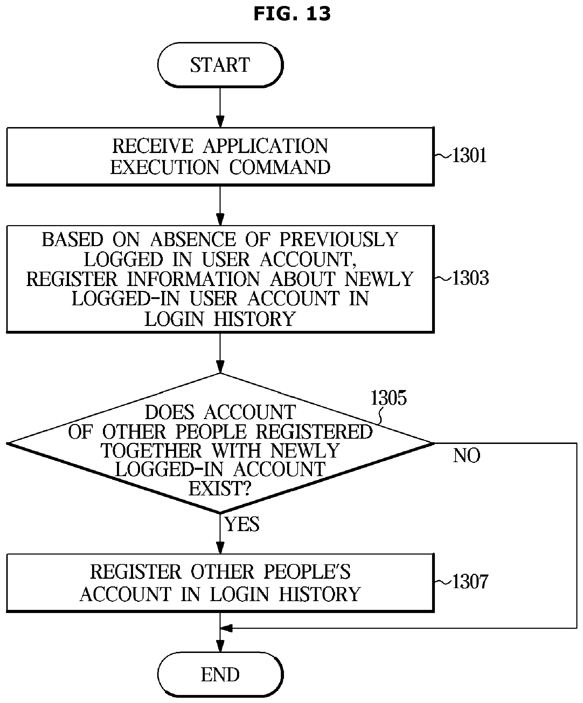

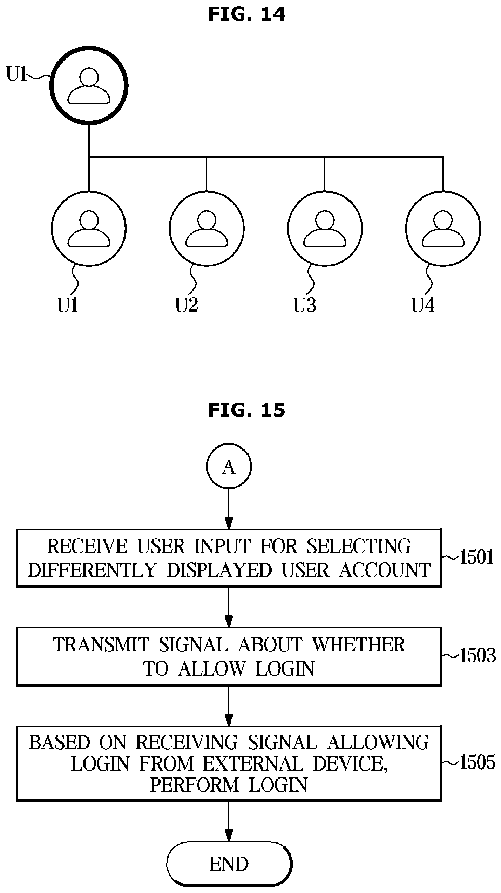

FIG. 13 is a flowchart illustrating a method for controlling a display apparatus in a case where no login history exists according to an embodiment. FIG. 14 is a diagram illustrating that other person's user accounts are registered together with one user account.

Based on receiving an application execution command from a user (1301), the above-described login process may be performed.

However, there may be cases where there is no user account that has been previously logged in to the application.

In this case, a new login may be performed by directly entering a user ID and password, and in this instance, the controller 12 may register information about the newly logged-in user account in a login history (1303).

That is, when the application is executed again later, the newly logged-in user account may be added to the plurality of user accounts that were previously logged in.

Recently, there are cases where a specific user account is registered together with the user accounts of other people, such as family members.

Through the above, user inconvenience of separately performing various contents, and the like, among family members may be reduced, and the accounts of other family members may be included in the account of a specific user, such as a representative member, so that when the representative member's account performs a specific process, the accounts of the remaining family members may also be affected.

As shown in FIG. 14, an account U1 of a representative member of family members may be registered together with accounts U2, U3, and U4 of the remaining family members including the representative member.

In this instance, in a case where the representative member's account U1 is newly logged in to an application of the display apparatus 10, when registering information of the logged-in user account in a login history, the account information of the remaining family members registered together may be registered in the login history.

That is, in a case where a preset other person's account is registered together with the newly logged-in user account, the controller 12 may register the account information of the other person registered together in the login history.

Accordingly, the inconvenience of having to log in individually for each family member may be eliminated.

FIG. 15 is a flowchart illustrating a process for performing a login based on a selection of a displayed user account according to an embodiment.

Displaying the most likely user account differently from the remaining user accounts has been described above.

In a case where a user selects a user account differently displayed, i.e., when receiving a user input for selecting the differently displayed user account (1501), a signal about whether to allow login may be transmitted to an external device 20 in which the selected user account is registered (1503).

Various forms of signals, such as a text message, push message, or web message, may be implemented and the form of the signal is not limited.

In a case where the user makes an input for login in response to the signal, i.e., when a signal allowing login is received from the external device 20, the controller 12 may perform a login with the selected user account (1505).

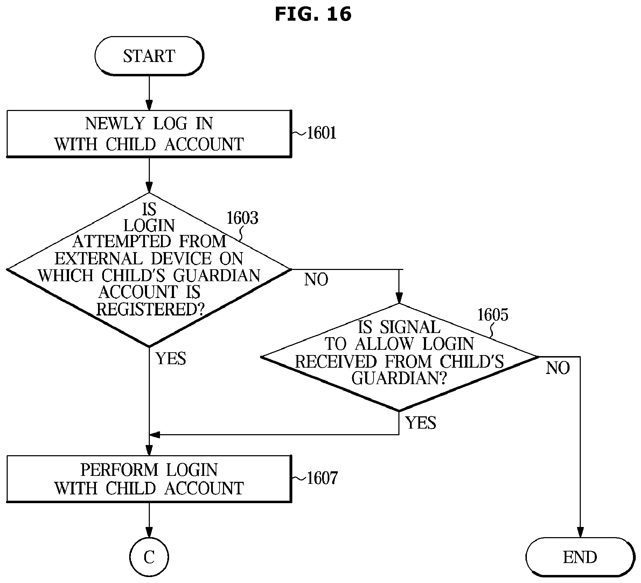

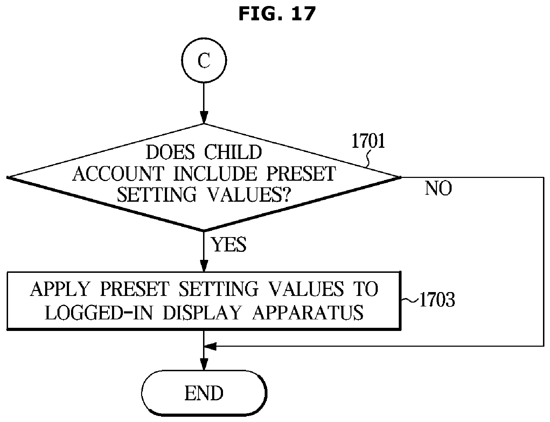

FIG. 16 and FIG. 17 are flowcharts illustrating operations performed when logging in with a child account according to an embodiment.

There may be a case where a user attempts to log in to an application with a child account.

In a case where a newly logged-in user account is the child account, the controller 12 may determine whether the login is attempted from an external device 20 where an account of a guardian of the child is registered. Based on determining that the login is attempted from the external device 20 where the child's guardian account is registered (Yes in operation 1603), the login may be performed with the child account (1607).

Based on determining that the login is not attempted from the external device 20 where the child's guardian account is registered (No in operation 1603), a signal to allow login may be transmitted to the external device 20 where the child's guardian account is registered. Based on receiving the signal to allow login (Yes in operation 1605), the login may be performed with the child account (1607).

As such, in order to protect the child, whether the login is attempted from the guardian's reliable device, and the like, may be determined to perform a login.

In addition, in a case where the login was performed with the child account and the child account includes preset setting values (Yes in operation 1701), the preset setting values may be applied to the logged-in display apparatus 10 (1703).

In other words, setting values for content restrictions based on the child's age, etc., may be stored in the child account in advance by the child's guardian, and the like.

The setting value may further include not only age-based content restrictions, but also preset device usage time or permission to use specific applications for the child account. However, the above examples are merely an example of the setting value, and may further include various settings that may be set with respect to the child account.

In performing a login with the child account, in a case where the child account includes the preset setting values, a signal about whether to maintain the setting values may be transmitted to the external device 20 where the child's guardian account is registered.

In a case where the signal to maintain the setting values is received, the preset setting values may be applied to the logged-in display apparatus 10, and in a case where the signal to maintain the setting values is not received, a default setting value may be applied.

According to an aspect of the disclosure, when logged in to an application that supports login for a plurality of accounts, the most likely user account to log in may be determined to perform the login, thereby enabling easy login to a shared device and enhancing a personalized application experience on the shared device.

In addition, in a case where a person's account is registered with the accounts of others, such as family members, the accounts of others (family members) may be registered in a login history by the login of one family member, thereby enabling easy login for the others (family members).

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that may be interpreted by a computer. For example, the computer-readable recording medium may be a read only memory (ROM), a random access memory (RAM), a magnetic tape, a magnetic disk, a flash memory, an optical data storage device, etc.

Although embodiments of the disclosure have been described with reference to the accompanying drawings, a person having ordinary skilled in the art will appreciate that other specific modifications may be easily made without departing from the scope of the disclosure defined by the appended set of claims. Accordingly, the foregoing embodiments should be regarded as illustrative rather than limiting in all aspects.

## Claims

1. A display apparatus (10), comprising:
communication circuitry (11) configured to communicate with an external device (20);
a display (15) configured to display at least one application; and
an input portion (16) configured to receive an execution command for the at least one application from a user; and
a controller (12) configured to control the display (15) to display a plurality of user accounts that were previously logged in in response to receiving the execution command,
wherein the controller (12) is configured to control the display (15) to display at least one of the plurality of user accounts differently from remaining user accounts based on communication information with the external device (20),
wherein, based on a newly logged-in user account being an account of a child, the controller (12) is configured to perform a login to the child account in response to a determination that the login is attempted by an external device to which an account of a guardian of the child is registered, and
wherein, based on a preset setting value being included in the child's account, the controller (12) is configured to control the preset setting value to be applied to the logged-in display apparatus (10).

2. The display apparatus (10) of claim 1, wherein the controller (12) is configured to control the display (15) to display at least one user account differently from the remaining user accounts, the at least one user account being registered on at least one external device that performs short-range communication with the communication circuitry.

3. The display apparatus (10) of claim 1, wherein the controller (12) is configured to control the display (15) to display at least one user account differently from the remaining user accounts, the at least one user account being registered on at least one external device connected to the same network as the communication circuitry.

4. The display apparatus (10) of claim 1, wherein, based on the plurality of user accounts being horizontally arranged and displayed, the controller (12) is configured to control the display (15) to allow at least one of the plurality of user accounts to be positioned to a left or right side of the remaining user accounts.

5. The display apparatus (10) of claim 1, wherein, based on the plurality of user accounts being vertically arranged and displayed, the controller (12) is configured to control the display (15) to allow at least one of the plurality of user accounts to be positioned above the remaining user accounts.

6. The display apparatus (10) of claim 1, wherein the controller (12) is configured to control the display (15) to display at least one of the plurality of user accounts in a highlighted or selectable state relative to the remaining user accounts.

7. The display apparatus (10) of claim 2, wherein, in response to a plurality of external devices performing short-range communication with the communication circuitry (11), the controller (12) is configured to control the display to display a plurality of user accounts registered on the external devices differently from the remaining user accounts, based on at least one of a strength of a signal received from each of the plurality of external devices through the communication circuitry, a number of logins of user accounts registered on the plurality of external devices, or a login order of the user accounts registered on the plurality of external devices.

8. The display apparatus (10) of claim 2, wherein, based on a single external device performing short-range communication with the communication circuitry, the controller (12) is configured to perform a login with the user account registered on the external device.

9. The display apparatus (10) of claim 2, wherein the controller (12) is configured to:
receive information of a plurality of external devices, in which the plurality of user accounts that were previously logged in are registered, from a server through long-range communication of the communication circuitry, and
control the display (15) to display at least one user account differently from the remaining user accounts, the at least one user account being registered on at least one external device that performs short-range communication with the communication circuitry (11) from among the plurality of external devices in which the plurality of user accounts that were previously logged in are registered.

10. The display apparatus (10) of claim 1, wherein the controller (12) is configured to register information about the newly logged-in user account in a login history, based on absence of a previously logged-in user account.

11. The display apparatus (10) of claim 10, wherein, based on another user's preset account being registered together with the newly logged-in user account, the controller (12) is configured to register information about the other user's account in the login history.

12. The display apparatus (10) of claim 1, wherein the controller (12) is configured to transmit a signal about whether to allow login to the external device (20), based on receiving a user input for selecting the differently displayed user account, and
perform a login to the selected user account, based on receiving a signal that allows login from the external device (20).

13. A method performed by a display apparatus (10) of any one of the preceding claims.

## Patentansprüche

1. Anzeigevorrichtung (10), umfassend:
eine Kommunikationsschaltung (11), die dazu konfiguriert ist, mit einer externen Vorrichtung (20) zu kommunizieren;
eine Anzeige (15), die dazu konfiguriert ist, mindestens eine Anwendung anzuzeigen; und
einen Eingabeabschnitt (16), der dazu konfiguriert ist, einen Ausführungsbefehl für die mindestens eine Anwendung von einem Benutzer zu empfangen; und
eine Steuerung (12), die dazu konfiguriert ist, die Anzeige (15) so zu steuern, dass sie als Reaktion auf den Empfang des Ausführungsbefehls eine Vielzahl von Benutzerkonten anzeigt, die zuvor angemeldet waren,
wobei die Steuerung (12) dazu konfiguriert ist, die Anzeige (15) so zu steuern, dass sie auf der Grundlage von Kommunikationsinformationen mit der externen Vorrichtung (20) mindestens eines der Vielzahl von Benutzerkonten anders als die übrigen Benutzerkonten anzeigt,
wobei basierend darauf, dass es sich bei einem neu angemeldeten Benutzerkonto um ein Konto eines Kindes handelt, die Steuerung (12) dazu konfiguriert ist, eine Anmeldung bei dem Kinderkonto durchzuführen, als Reaktion auf die Feststellung, dass die Anmeldung von einer externen Vorrichtung versucht wird, bei dem ein Konto eines Erziehungsberechtigten des Kindes registriert ist, und
wobei basierend darauf, dass im Konto des Kindes ein voreingestellter Einstellwert enthalten ist, die Steuerung (12) dazu konfiguriert ist, den voreingestellten Einstellwert zu steuern, damit dieser auf die angemeldete Anzeigevorrichtung (10) angewendet wird.

2. Anzeigevorrichtung (10) nach Anspruch 1, wobei die Steuerung (12) dazu konfiguriert ist, die Anzeige (15) so zu steuern, dass sie mindestens ein Benutzerkonto anders als die übrigen Benutzerkonten anzeigt, wobei das mindestens eine Benutzerkonto auf mindestens einer externen Vorrichtung registriert ist, die eine Kurzstreckenkommunikation mit der Kommunikationsschaltung durchführt.

3. Anzeigevorrichtung (10) nach Anspruch 1, wobei die Steuerung (12) dazu konfiguriert ist, die Anzeige (15) so zu steuern, dass sie mindestens ein Benutzerkonto anders als die übrigen Benutzerkonten anzeigt, wobei das mindestens eine Benutzerkonto auf mindestens einer externen Vorrichtung registriert ist, die mit demselben Netzwerk wie die Kommunikationsschaltung verbunden ist.

4. Anzeigevorrichtung (10) nach Anspruch 1, wobei, basierend auf der horizontalen Anordnung und Anzeige der Vielzahl von Benutzerkonten, die Steuerung (12) dazu konfiguriert ist, die Anzeige (15) so zu steuern, dass mindestens eines der Vielzahl von Benutzerkonten links oder rechts von den übrigen Benutzerkonten positioniert werden kann.

5. Anzeigevorrichtung (10) nach Anspruch 1, wobei, basierend auf der vertikalen Anordnung und Anzeige der Vielzahl von Benutzerkonten, die Steuerung (12) dazu konfiguriert ist, die Anzeige (15) so zu steuern, dass mindestens eines der Vielzahl von Benutzerkonten über den übrigen Benutzerkonten positioniert werden kann.

6. Anzeigevorrichtung (10) nach Anspruch 1, wobei die Steuerung (12) dazu konfiguriert ist, die Anzeige (15) so zu steuern, dass sie mindestens eines der Vielzahl von Benutzerkonten relativ zu den übrigen Benutzerkonten in einem hervorgehobenen oder auswählbaren Zustand anzeigt.

7. Anzeigevorrichtung (10) nach Anspruch 2, wobei als Reaktion darauf, dass eine Vielzahl externer Vorrichtungen eine Kurzstreckenkommunikation mit der Kommunikationsschaltung (11) durchführt, die Steuerung (12) dazu konfiguriert ist, die Anzeige so zu steuern, dass sie eine Vielzahl von auf den externen Vorrichtungen registrierten Benutzerkonten anders als die übrigen Benutzerkonten anzeigt, basierend auf mindestens einem von einer Stärke eines über die Kommunikationsschaltung von jeder der Vielzahl externer Vorrichtungen empfangenen Signals, der Anzahl der Anmeldungen von auf der Vielzahl externer Vorrichtungen registrierten Benutzerkonten und einer Reihenfolge der Anmeldungen der auf der Vielzahl externer Vorrichtungen registrierten Benutzerkonten.

8. Anzeigevorrichtung (10) nach Anspruch 2, wobei basierend darauf, dass eine einzelne externe Vorrichtung eine Kurzstreckenkommunikation mit der Kommunikationsschaltung durchführt, die Steuerung (12) dazu konfiguriert ist, eine Anmeldung mit dem auf der externen Vorrichtung registrierten Benutzerkonto durchzuführen.

9. Anzeigevorrichtung (10) nach Anspruch 2, wobei die Steuerung (12) dazu konfiguriert ist,
über eine Langstreckenkommunikation der Kommunikationsschaltung von einem Server Informationen einer Vielzahl externer Vorrichtungen zu empfangen, in denen die Vielzahl zuvor angemeldeter Benutzerkonten registriert ist, und
die Anzeige (15) so zu steuern, dass sie mindestens ein Benutzerkonto anders als die übrigen Benutzerkonten anzeigt, wobei das mindestens eine Benutzerkonto auf mindestens einer externen Vorrichtung registriert ist, die eine Kurzstreckenkommunikation mit der Kommunikationsschaltung (11) durchführt, und zwar aus der Vielzahl externer Vorrichtungen, in denen die Vielzahl von zuvor angemeldeten Benutzerkonten registriert ist.

10. Anzeigevorrichtung (10) nach Anspruch 1, wobei die Steuerung (12) dazu konfiguriert ist, Informationen über das neu angemeldete Benutzerkonto in einer Anmeldungshistorie zu registrieren, basierend auf dem Fehlen eines zuvor angemeldeten Benutzerkontos.

11. Anzeigevorrichtung (10) nach Anspruch 10, wobei basierend darauf, dass ein voreingestelltes Konto eines weiteren Benutzers zusammen mit dem neu angemeldeten Benutzerkonto registriert wird, die Steuerung (12) dazu konfiguriert ist, Informationen über das Konto des weiteren Benutzers in der Anmeldungshistorie zu registrieren.

12. Anzeigevorrichtung (10) nach Anspruch 1, wobei die Steuerung (12) dazu konfiguriert ist, basierend auf dem Empfang einer Benutzereingabe zur Auswahl des anders angezeigten Benutzerkontos ein Signal darüber, ob die Anmeldung zugelassen werden soll, an die externe Vorrichtung (20) zu senden, und
basierend auf dem Empfang eines Signals von der externen Vorrichtung (20), das die Anmeldung zulässt, eine Anmeldung bei dem ausgewählten Benutzerkonto durchzuführen.

13. Verfahren, das von einer Anzeigevorrichtung (10) nach einem der vorstehenden Ansprüche durchgeführt wird.

## Revendications

1. Appareil d'affichage (10), comprenant:
un circuit de communication (11) configuré pour communiquer avec un dispositif externe (20);
un affichage (15) configuré pour afficher au moins une application; et
une partie d'entrée (16) configurée pour recevoir d'un utilisateur une commande d'exécution pour l'au moins une application; et
un contrôleur (12) configuré pour commander l'affichage (15) afin d'afficher une pluralité de comptes d'utilisateur qui ont été précédemment connectés en réponse à la réception de la commande d'exécution,
dans lequel le contrôleur (12) est configuré pour commander l'affichage (15) afin d'afficher au moins un de la pluralité de comptes d'utilisateur différemment des comptes d'utilisateur restants sur la base d'informations de communication avec le dispositif externe (20),
dans lequel, sur la base du fait qu'un compte d'utilisateur nouvellement connecté est un compte d'un enfant, le contrôleur (12) est configuré pour effectuer une connexion au compte de l'enfant en réponse à une détermination selon laquelle la connexion est tentée par un dispositif externe auquel un compte d'un tuteur de l'enfant est enregistré, et
dans lequel, sur la base du fait qu'une valeur de réglage prédéfinie est incluse dans le compte de l'enfant, le contrôleur (12) est configuré pour commander l'application de la valeur de réglage prédéfinie à l'appareil d'affichage connecté (10).

2. Appareil d'affichage (10) selon la revendication 1, dans lequel le contrôleur (12) est configuré pour commander l'affichage (15) afin d'afficher au moins un compte d'utilisateur différemment des comptes d'utilisateur restants, l'au moins un compte d'utilisateur étant enregistré sur au moins un dispositif externe qui effectue une communication à courte portée avec le circuit de communication.

3. Appareil d'affichage (10) selon la revendication 1, dans lequel le contrôleur (12) est configuré pour commander l'affichage (15) afin d'afficher au moins un compte d'utilisateur différemment des comptes d'utilisateur restants, l'au moins un compte d'utilisateur étant enregistré sur au moins un dispositif externe connecté au même réseau que le circuit de communication.

4. Appareil d'affichage (10) selon la revendication 1, dans lequel, sur la base du fait que la pluralité de comptes d'utilisateur sont disposés horizontalement et affichés, le contrôleur (12) est configuré pour commander l'affichage (15) afin de permettre qu'au moins un de la pluralité de comptes d'utilisateur soit positionné sur un côté gauche ou droit des comptes d'utilisateur restants.

5. Appareil d'affichage (10) selon la revendication 1, dans lequel, sur la base du fait que la pluralité de comptes d'utilisateur sont disposés verticalement et affichés, le contrôleur (12) est configuré pour commander l'affichage (15) afin de permettre qu'au moins un de la pluralité de comptes d'utilisateur soit positionné au-dessus des comptes d'utilisateur restants.

6. Appareil d'affichage (10) selon la revendication 1, dans lequel le contrôleur (12) est configuré pour commander l'affichage (15) afin d'afficher au moins un de la pluralité de comptes d'utilisateur dans un état mis en évidence ou sélectionnable par rapport aux comptes d'utilisateur restants.

7. Appareil d'affichage (10) selon la revendication 2, dans lequel, en réponse à une pluralité de dispositifs externes effectuant une communication à courte portée avec le circuit de communication (11), le contrôleur (12) est configuré pour commander l'affichage afin d'afficher une pluralité de comptes d'utilisateur enregistrés sur les dispositifs externes différemment des comptes d'utilisateur restants, sur la base d'au moins un parmi une intensité d'un signal reçu de chacun de la pluralité de dispositifs externes par l'intermédiaire du circuit de communication, un nombre de connexions de comptes d'utilisateur enregistrés sur la pluralité de dispositifs externes, ou un ordre de connexion des comptes d'utilisateur enregistrés sur la pluralité de dispositifs externes.

8. Appareil d'affichage (10) selon la revendication 2, dans lequel, sur la base du fait qu'un unique dispositif externe effectue une communication à courte portée avec le circuit de communication, le contrôleur (12) est configuré pour effectuer une connexion avec le compte d'utilisateur enregistré sur le dispositif externe.

9. Appareil d'affichage (10) selon la revendication 2, dans lequel le contrôleur (12) est configuré pour:
recevoir, depuis un serveur par l'intermédiaire d'une communication à longue portée du circuit de communication, des informations d'une pluralité de dispositifs externes, dans lesquels la pluralité de comptes d'utilisateur qui ont été précédemment connectés sont enregistrés, et
commander l'affichage (15) afin d'afficher au moins un compte d'utilisateur différemment des comptes d'utilisateur restants, l'au moins un compte d'utilisateur étant enregistré sur au moins un dispositif externe qui effectue une communication à courte portée avec le circuit de communication (11) parmi la pluralité de dispositifs externes dans lesquels la pluralité de comptes d'utilisateur qui ont été précédemment connectés sont enregistrés.

10. Appareil d'affichage (10) selon la revendication 1, dans lequel le contrôleur (12) est configuré pour enregistrer des informations concernant le compte d'utilisateur nouvellement connecté dans un historique de connexion, sur la base de l'absence d'un compte d'utilisateur précédemment connecté.

11. Appareil d'affichage (10) selon la revendication 10, dans lequel, sur la base du fait qu'un compte prédéfini d'un autre utilisateur est enregistré conjointement avec le compte d'utilisateur nouvellement connecté, le contrôleur (12) est configuré pour enregistrer des informations concernant le compte de l'autre utilisateur dans l'historique de connexion.

12. Appareil d'affichage (10) selon la revendication 1, dans lequel le contrôleur (12) est configuré pour transmettre au dispositif externe (20) un signal concernant l'autorisation ou non d'une connexion, sur la base de la réception d'une entrée utilisateur destinée à sélectionner le compte d'utilisateur affiché différemment, et
effectuer une connexion au compte d'utilisateur sélectionné, sur la base de la réception, depuis le dispositif externe (20), d'un signal qui autorise la connexion.

13. Procédé exécuté par un appareil d'affichage (10) selon l'une quelconque des revendications précédentes.
